# EUROPEAN PATENT SPECIFICATION

(11) **EP 2 628 627 B1**
(45) Date of publication and mention of the grant of the patent: **20.04.2016**
(21) Application number: 12155428.1
(22) Date of filing: 14.02.2012
(51) Int. Cl.: B60K 35/00, B60Q 3/04, B60R 13/02, B60K 37/00

(54) **Micro perforated leather with a lighting element**
Mikroperforiertes Leder mit einem Beleuchtungselement
Cuir micro perforé avec élément d'éclairage

(43) Date of publication of application: 21.08.2013
(73) Proprietor: Faurecia Innenraum Systeme GmbH, 76767 Hagenbach (DE)
(72) Inventor: Walter, Michael, 76228 Karlsruhe (DE); Wandtke, Sebastian, 69115 Heidelberg (DE)
(74) Representative: Richardt Patentanwälte PartG mbB

(56) References cited:
- EP-A2- 2 060 443
- DE-A1- 10 125 516
- DE-A1-102010 051 166
- FR-A1- 2 936 589
- US-A1- 2002 101 738

## Description

The invention relates to a micro perforated leather and an instrument panel for a vehicle which is at least partially covered with the micro perforated leather. Passenger compartment of transport systems like ships, trains and vehicles are typically equipped with lighting elements. The lighting elements serve the illumination of the interior of the passenger compartment. While often, a rather diffuse lighting is desired, sometimes there is a need for a more directed light output. Typically, directing of light is achieved by providing light focusing or light directing elements like lenses or parabolic reflectors. A disadvantage with such kind of arrangements for producing directed light is that they are rather expensive and/or difficult to manufacture due to the presence of multiple individual elements.

EP 2060443 A2 teaches an interior component for a vehicle with a compound layer and a perforated decoration layer which is illuminated from a light source on the back side. US 2002/101738 A1 relates to an apparatus and method of perforating the cover layer or soft skin of an automotive trim panel such as an instrument panel with a laser to allow light to bleed through the perforations. DE 10 2010 051186 A1 discloses a method for producing a corpus with graphics getting visible during illumination. FR 2936589 A1 relates to an automotive trim element comprising a covering with openings and a light source positioned behind the covering, wherein the main axis of the openings is declined in relation to the plane formed by the surface of the covering. DE 101 25 516 A1 teaches a device only displaying information when being illuminated from the rear side.

It is an objective of the invention to provide for a micro perforated leather and an instrument panel for a vehicle, wherein the instrument panel is at least partially covered with the micro perforated leather.

These problems are solved by the independent claim. Preferred embodiments are given by the dependent claims.

The invention relates to a micro perforated leather, wherein due to the micro perforation the leather comprises a multitude of holes, wherein the holes have a cylindrical shape, wherein the diameter of the holes is in between 20-50 µm and the length of the holes is in between 1-2 mm, wherein the leather further comprises a lighting element adapted for emanating light, wherein the lighting element and the leather are arranged to enable passage of the emanated light through the holes.

Embodiments of the invention may have the advantage that an illumination through the leather can be provided with well directed light. The light is only visible at a very narrow view angle since the well defined diameter and length of the cylindrical passages prevents for a diffusion of the light. Thus, for example ambient light effects can be provided. Further, it can be for example ensured that blinding of people outside the emanation angle is avoided. In one scenario, the micro perforated leather may be applied in a passenger compartment of a transport system like for example a vehicle, such that by using the directed light parts of the passenger compartment can be illuminated while still avoiding the risk that an occupant gets accidentally blinded by the emanated light.

It has to be noted that even though a directing of light may never be perfect, by means of the invention a diffusion angle of less than 5 degrees from the central axis of the cylindrical-shaped holes can be provided. Throughout the invention, the "leather" has to be understood as including any leather like material like real leather and artificial leather.

In accordance with an embodiment of the invention, the diameter-to-length ratio of the holes is in between 0,025 and 0,05. With this well defined diameter/length ratio of the holes in combination with the above mentioned diameter and length ranges a perfect compromise between obtaining of directed light versus visibility of the micro perforation itself and versus the light emitting efficiency for light penetrating through the holes is ensured. In case for example the diameter of the holes would be chosen too big, even though the light emitting efficiency may increase, but the holes themselves may be visible to a user. Further, in case of choosing the length of the cylinders too small, the light emitting efficiency may also increase but the capability of directing light into a predefined direction may be compromised.

In accordance with an embodiment of the invention, each hole has a cylindrical axis, wherein the axis of all holes is commonly oriented in a single direction or in a predefined number of directions. In other words, all the holes are predetermined in advance regarding their light emitting direction - the usage of holes with rather random directions of their cylindrical axis, diameters and length is avoided. However, more than one single orientation of the cylindrical axis of the holes can be chosen. For example, in case of a number of n holes, n /2 holes may have a cylindrical axis in a first direction and the other half n /2 holes may have their cylindrical axis in a second direction. With this arrangement, with a single layer of micro perforated leather multiple individual spots can be illuminated at the same time.

In accordance with an embodiment of the invention, the lighting element comprises a flat lighting panel providing a laminar emanation of the light. The element is located on the back side of the micro perforated leather, such that with a single element the multitude of individual holes can be illuminated from the back side. Thus, with minimal technical effort a laminar illumination from the back side and thus a laminar emanation of light on the front side of the leather can be provided.

In accordance with an embodiment of the invention, the diameter and mutual distance of the holes is arranged such that the holes appear to be invisible for an observer at a minimum distance of 50 cm. For example in case of a passenger compartment this permits to provide the appearance of a leather covered surface with no hint to any viewing observer that the surface covered by the leather may be used for lighting purposes.

In another aspect, the invention relates to an instrument panel for a vehicle, wherein the instrument panel is at least partially covered with the micro perforated leather as described above.

In the following, preferred embodiments of the invention are described in greater detail.
- Fig. 1: shows a perspective view of the inside of a passenger compartment of a vehicle,
- Fig. 2: shows a sketch of a side view of a micro perforated leather,
- Fig. 3: shows a sketch of a side view of a micro perforated leather.

In the following, similar elements are denoted by the same reference numerals.

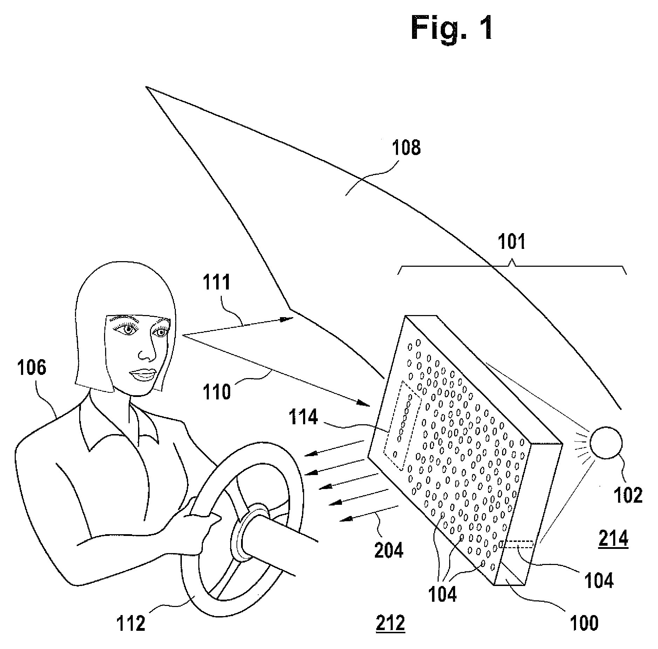

Fig. 1 shows a perspective view of the inside of a passenger compartment of a vehicle. Shown is an observer (passenger) 106 which is looking in direction 110 onto an instrument panel 101 of the vehicle. On top of the instrument panel 101, a windscreen 108 is provided through which the passenger 106 may look onto the street and steer his or her car.

The instrument panel 101 is covered with a micro perforated leather 100. The leather 100 comprises a multitude of holes 104 due to micro perforation. All the holes have a cylindrical shape with a predefined diameter-to-length ratio, predefined distance and predefined ranges of diameters and length.

On the back side of the micro perforated leather 100, a lighting element 102 is provided which emanates light onto the back side of the leather 100. Upon illumination of the back side, light is penetrating through the holes 104 and exiting the holes 104 on the front side of the leather towards the interior of the passenger compartment and thus towards the passenger 106. Due to the well chosen size and shape of the holes 104, the light is directed into a single direction 204 thus illuminating for example only the steering wheel 112 of the vehicle. Thus, the passenger 106 looking into direction 110 onto the instrument panel 101 or looking into direction 111 through the windshield 108 is not blinded by the light output through the holes 104. Due to the well defined diameter/length ratio of the holes a very narrow view angle is ensured. Nevertheless, due to the further well chosen sizes of the holes 104 the light output efficiency is high enough in order to illuminate for example the steering wheel 112.

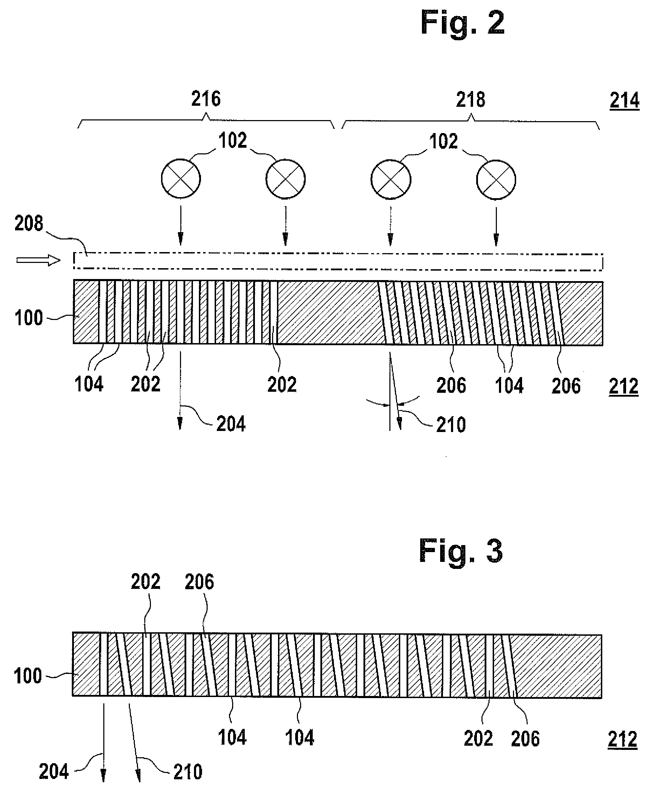

Fig. 2 shows a sketch of a side view of the micro perforated leather 100. Clearly visible are again the holes 104 through which light may be exiting into the direction 204 (left side of Fig. 2). In addition to the holes 104 having the cylindrical shape 202 on the left side of Fig. 2 in section 216, holes 104 with cylindrical shapes 206 are provided on the right side of Fig. 2 in sections 218. The direction of the cylindrical axis of the cylinders 202 differs from the direction of the cylindrical axis of the cylinders 206. In detail, the axis of the cylinders 206 is inclined with respect to the axis of the cylinders 202. As a result, light passing through the cylinders 202 is directed in the single direction 204, whereas light passing through the cylinders 206 is directed into single direction 210. Direction 210 is inclined with respect to the direction 204. By this arrangement of the cylinders 202 and 206, two different spots can be illuminated on the front side 212 of the leather 100 at the same time.

For illumination purposes, two different embodiments are shown in Fig. 2. For example, individual lighting elements 102 like LEDs can be provided on the back side 214 of the leather 100, wherein these lighting elements 102 may provide a rather diffuse light to the holes 104. Thus, the diffuse light emanated from the lighting elements 102 is passing through the cylinders 202 and 206 respectively and directed into the directions 204 and 210, respectively. Alternatively, a flat lighting panel 208 may be used for providing a laminar emanation of the light on the back side 214 of the leather 100.

It has to be noted, that generally the different sections 216 and 218 can be illuminated from the back side 214 in an independent manner. For example, the lighting elements 102 in section 216 may have a certain predefined color, whereas the lighting elements 102 in section 218 may have a different predefined color. Further, the lighting elements may be switched on and off separately, such that it is possible to control the lighting of individual spots separately and independently. For this purpose, other than illustrated in Fig. 2 the directions of the cylindrical axis of the cylinders in sections 216 and 218 may either coincide or be different from each other.

Further, it is possible to arrange the holes 104 of the cylinders 202 and/or the holes 104 of the cylinders 206 in such a manner, that the holes define the shape of a symbol. This is illustratively depicted in Fig. 1, wherein the leather 100 comprises a section 114 with holes arranged in such a manner that in total the holes represent the shape of an exclamation mark. In case of an instrument panel, generally the holes may be arranged on such positions of the instrument panel that their light emanation is visible to the driver of the vehicle. In case in certain situations visual information, like for example emergency information, needs to be provided to the driver, the section 114 may be illuminated from the back side of the leather and thus provide a clearly visible indication or warning to the driver. The warning may either be seen directly by the driver (view direction 110 in Fig. 1) or the light emanation may be directed to for example the windshield 108 of the vehicle, such that the driver can see the information as a reflection in the windshield 108 with his view direction 111. The latter embodiment may act as a so called 'head up display'.

Any kinds of symbols and information may be represented by a respective arrangement of holes in the micro perforated leather. The above described embodiments may not only be used in vehicles, but in any kind of passenger transportation systems. Any kind of information may be directly provided or indirectly provided via reflections to a passenger of the transportation system.

Fig. 3 shows a side view of a further sketch of an embodiment of a micro perforated leather 100. Compared to Fig. 2, the cylinders 202 and 206 are located in direct neighborhood with each other, such that with one single lighting element 102 or 208 it is possible to provide an illumination in the direction 204 and 210 at the same time. Thus, with minimal technical effort regarding installation of lighting elements, it is possible to illuminate two individual spots on the front side 212 of the leather 100 at the same time.

### List of reference numerals

- 100: leather
- 101: instrument panel
- 102: lighting element
- 104: holes
- 106: observer
- 108: windscreen
- 110: direction
- 111: direction
- 112: steering wheel
- 114: sign
- 202: cylinder
- 204: direction
- 206: cylinder
- 208: lighting panel
- 210: direction
- 212: front side
- 214: back side
- 216: section
- 218: section

## Claims

1. A backlighted micro-perforated leather (100) comprising a lighting element (102;208), wherein the micro-perforated leather (100) is a real or artificial leather, wherein due to the micro perforation the leather (100) comprises a multitude of holes (104), wherein the holes (104) have a cylindrical shape, wherein the diameter of the holes (104) is in between 20 to 50 micrometers and the length of the holes (104) is in between 1 to 2 millimeters, wherein the lighting element (102;208) is adapted for emanating light, wherein the lighting element (902;208) and the micro-perforated leather (100) are arranged to enable passage the emanated light through the holes (104), wherein the diameter to length ratio of the holes (104) is in between 0,025 and 0,05 wherein the cylindrical shape has a central axis and the central axis (204; 210) of all holes (104) are commonly oriented in a single direction or in a predefined number of directions (204; 210), wherein the emanated light has a diffusion angle of less than 5 degrees from the central axis.

2. The backlighted micro-perforated leather claim 1, wherein the lighting element (208) comprises a flat lighting panel providing a laminar emanation of the light.

3. The backlighted micro-perforated leather of any of the previous claims, wherein the diameter and mutual distance of the holes (104) is arranged such that the holes (104) appear to be invisible for an observer (106) at a minimum distance of 50 cm.

4. An instrument panel (101) for a vehicle, wherein the instrument panel (101) is at least partially covered with the micro perforated leather (100) according to any of the previous claims.

## Patentansprüche

1. Hinterleuchtetes mikroperforiertes Leder (100), das ein Beleuchtungselement (102; 208) aufweist, wobei das mikroperforierte Leder (100) ein echtes oder ein Kunstleder ist, wobei das Leder aufgrund der Mikroperforation eine Vielzahl von Löchern (104) aufweist, wobei die Löcher (104) eine zylindrische Form haben, wobei der Durchmesser der Löcher (104) zwischen 20 und 50 Mikrometer beträgt und die Länge der Löcher (104) zwischen 1 und 2 Millimeter beträgt, wobei das Beleuchtungselement (102; 208) zum Ausstrahlen von Licht ausgeführt ist, wobei das Beleuchtungselement (102; 208) und das mikroperforierte Leder (100) angeordnet sind, um den Durchtritt des ausgestrahlten Lichts durch die Löcher (104) zu ermöglichen, wobei das Verhältnis des Durchmessers zur Länge der Löcher (104) zwischen 0,025 und 0,05 ist, wobei die zylindrische Form eine Mittelachse hat und die Mittelachse (204; 210) aller Löcher (104) gemeinsam in einer einzigen Richtung oder in einer vordefinierten Anzahl von Richtungen (204; 210) ausgerichtet sind, wobei das ausgestrahlte Licht einen Streuwinkel von weniger als 5 Grad zur Mittelachse hat.

2. Hinterleuchtetes mikroperforiertes Leder nach Anspruch 1, wobei das Beleuchtungselement (208) eine flache Beleuchtungsplatte umfasst, die eine laminare Ausstrahlung des Lichts ergibt.

3. Hinterleuchtetes mikroperforiertes Leder nach einem der vorhergehenden Ansprüche, wobei der Durchmesser und der gegenseitige Abstand der Löcher (104) so angeordnet sind, dass die Löcher (104) für einen Beobachter (106) in einem Mindestabstand von 50 cm unsichtbar erscheinen.

4. Instrumententafel (101) für ein Fahrzeug, wobei die Instrumententafel (101) zumindest teilweise mit dem mikroperforierten Leder (100) nach einem der vorhergehenden Ansprüche überzogen ist.

## Revendications

1. Cuir micro-perforé rétro-éclairé (100) comprenant un élément d'éclairage (102 ; 208), où le cuir micro-perforé (100) est un cuir naturel ou artificiel, où, à cause de la micro-perforation, le cuir (100) comprend une multitude de trous (104), où les trous (104) ont une forme cylindrique, où le diamètre des trous (104) est entre 20 et 50 micromètres et la longueur des trous (104) est entre 1 et 2 millimètres, où l'élément d'éclairage (102 ; 208) est adapté pour une lumière émise, où l'élément d'éclairage (102 ; 208) et le cuir micro-perforé (100) sont disposés pour permettre le passage de la lumière émise à travers les trous (104), où le rapport du diamètre sur la longueur des trous (104) est entre 0,025 et 0,05, où la forme cylindrique possède un axe central et l'axe central (204 ; 210) de tous les trous (104) est habituellement orienté dans une seule direction ou dans un nombre prédéfini de directions (204 ; 210), où la lumière émise a un angle de diffusion de moins de 5 degrés par rapport à l'axe central.

2. Cuir micro-perforé rétro-éclairé selon la revendication 1, où l'élément d'éclairage (208) comprend un tableau d'éclairage plat produisant une émission laminaire de la lumière.

3. Cuir micro-perforé rétro-éclairé selon l'une quelconque des revendications précédentes, où le diamètre et la distance mutuelle des trous (104) sont disposés de sorte que les trous (104) paraissent être invisibles pour un observateur (106) à une distance minimale de 50 cm.

4. Tableau de bord (101) d'un véhicule, où le tableau de bord (101) est au moins partiellement recouvert par le cuir micro-perforé (100) selon l'une quelconque des revendications précédentes.
